# EUROPEAN PATENT SPECIFICATION

(11) **EP 0 405 954 B1**
(45) Date of publication and mention of the grant of the patent: **21.09.1994**
(21) Application number: 90307048.0
(22) Date of filing: 27.06.1990
(51) Int. Cl.: E02B 3/26

(54) **Rubber fender**
Fender aus Kautschuk
Défense d'accrochage en caoutchouc

(30) Priority: 30.06.1989 JP 77788/89 U
(43) Date of publication of application: 02.01.1991
(73) Proprietor: SUMITOMO RUBBER INDUSTRIES LIMITED, Chuo-ku Kobe-shi Hyogo 651 (JP)
(72) Inventor: Sakuraoka, Makato, Kobe-shi, Hyogo 655 (JP); Takehara, Yasuo, Kakogawa-shi, Hyogo 675 (JP)
(74) Representative: Clifford, Frederick Alan

(56) References cited:
- FR-A- 2 320 391
- FR-A- 2 534 950
- US-A- 3 335 689
- US-A- 4 143 612

## Description

### Background of the invention

The present invention relates to a rubber fender, and more particularly to a rubber fender serving as a shock absorber at the time when a ship comes alongside or moored at the pier.

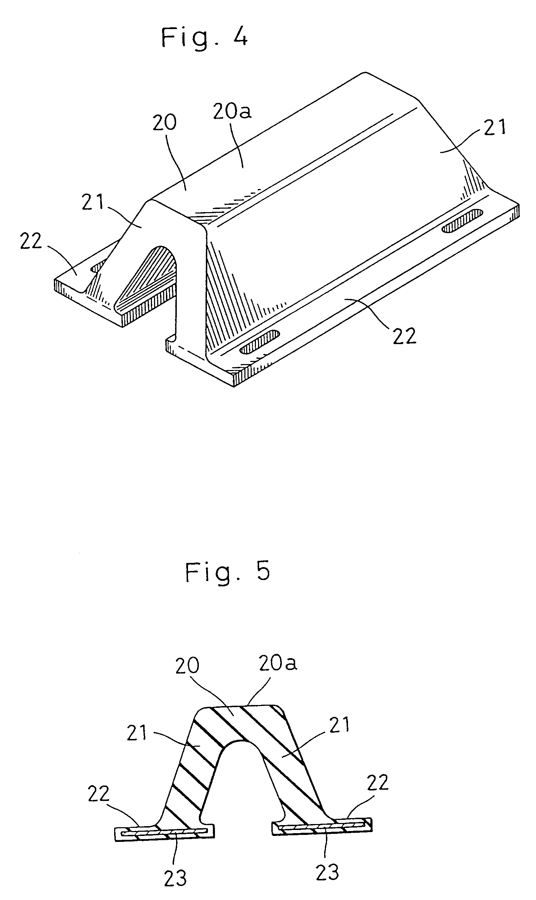

As shown in Figs. 4 and 5, a conventional rubber fender has an impact receiving section 20 made of rubber alone, lateral wall sections 21 made of rubber alone and extending from the impact receiving section 20 as widened toward the tips thereof, and fitting sections 22 made of rubber alone and attached to the tips of the lateral wall sections 21 and incorporating attaching iron plates 23.

When such a fender receives a load exerted by a ship coming alongside the pier, the fender is adapted to be bent and deformed, thus producing a shock absorbing action for absorbing an impact energy produced at the time when the ship comes in contact with the fender. Accordingly, importance is attached to the rubber strength which can resist against the impact given at the time when the ship comes in contact with the fender. Fig. 6 is a graph showing the relationship between the reaction force and the energy absorption of a fender made of an elastic rubber. Fig. 6 shows that the capability of the fender is higher, as the ratio of the energy absorption to the reaction force is higher. Further, the fender repeatedly comes in contact with the broadside of a ship during the ship is moored at the pier. Accordingly, if the fender is considerably abraded and damaged at the top surface 20a of the impact receiving section 20 which comes in contact with the broadside, the fender may not stand a long-term use. It is therefore required that the fender is also provided with abrasion resistance and damage resistance.

In the conventional fender made of an elastic rubber only, however, the broadside of a ship repeatedly comes in contact with the top surface 20a (impact receiving surface) of the impact receiving section 20 and the top surface 20a is considerably abraded and damaged. It is therefore not possible to use the fender for a long period of time.

As the material of the rubber used for the fender, there may be used natural rubber, synthetic rubber (butadiene rubber, styrene-butadiene rubber) or blended rubber of the rubbers above-mentioned. As a rubber reinforcing agent, carbon black is generally used. In this connection, the fender color is black at its appearance. This makes it difficult to discriminate between the fender and the pier. Accordingly, there are instances where the ship operator mistakes the fender for the pier so that the ship comes in contact with the pier without the ship speed sufficiently lowered. In such a case, an excessive impact energy is exerted to the fender. This causes the fender to be damaged. In the worst case, the ship may be also damaged. Further, fender slip marks may be put on the ship due to the friction produced at the time the ship comes in contact with the fender. Thus, the ship may be soiled.

To solve such various problems concerning the color of the fender, rubber components in other color than black may be used. In such a case, as a rubber reinforcing agent, silica may be used instead of conventionally used carbon black. However, since silica alone may not produce a sufficient reinforcing effect, a silane-type coupling agent is generally added to enhance the bonding force of silica. However, silica is more expensive than carbon black, and particularly, the silane-type coupling agent is very expensive. This results in increase in cost by 1.5 to 2 times the cost of carbon black-containing rubber, thus presenting the disadvantage in view of economy. Further, such rubber containing silica instead of carbon black is inferior in physical strength to the carbon black-containing rubber. To manufacture the fender, a mold is used to heat and vulcanize rubber. The resultant products are therefore apt to be stained due to soil or the like of the mold surface. In particular, such a trend is remarkable after products have been manufactured with the use of black rubber component.

FR-A-2 534 950 discloses a circular-shaped fender which is coated with a polyethylene coating.

FR-A-2 320 391 discloses a fender according to the preamble of claim 1 and which is coated with a polyurethane elastomer.

### Summary of the invention

It is a main object of the present invention to provide a fender which may be improved in abrasion resistance without injury of the impact energy absorption action which is the absolute condition for a fender, and which may be colored as desired, thereby to improve the safety of a ship coming alongside the pier and the beauty thereof, and which may prevent the ship from being soiled.

In accordance with the present invention there is provided a rubber fender comprising an outer impact receiving section, side wall sections extending from said impact receiving section and fitting sections attached to the tips of said side wall sections, all said sections being made of rubber alone, whereby the top surface of said outer impact receiving section and the surfaces of side wall sections are coated with a layer of polytetramethylene glycol type polyurethane elastomer,
said coating layer of polytetramethylene glycol type elastomer on the top surface of said outer impact receiving section having a thickness (t1) in a range from 2 to 20 mm, and said coating layer of polytetramethylene glycol type elastomer on each of the surfaces of said side wall sections having a thickness (t2) set of 10% or less of the thickness (t) of each of said side wall sections.

Further, polytetramethylene glycol type polyurethane elastomer may be colored as desired by mixing suitable coloring agents therewith. Accordingly, when the polytetramethylene glycol type polyurethane elastomer is colored in red, yellow or the like, the fender position may be easily visually recognized even remotely. This prevents the ship operator from failing to recognize the fender so that the ship erroneously comes in contact with other article. This not only enhances the safety but also improves the beauty of the pier. Further, stains are hardly attached to the coating layer of polytetramethylene glycol type polyurethane elastomer, thereby facilitating the cleaning of the fender.

In the foregoing, the thickness of the coating layer of polytetramethylene glycol type polyurethane elastomer on the top surface of the impact receiving section has been set to the range from 2 to 20 mm for the following reasons. If the thickness is smaller than the range above-mentioned, the fender is not provided with sufficient abrasion resistance and sufficient damage resistance. If the thickness is greater than the range above-mentioned, the amount of use of polytetramethylene glycol type polyurethane elastomer which is expensive as compared with the rubber material, is increased, resulting in increase in cost.

According to this invention, the coating layer of polytetramethylene glycol type polyurethane elastomer is disposed not only on the top surface of the impact receiving section of the fender, but also on each of the surfaces of the lateral wall sections. By such provision of the coating layers on the surfaces of the lateral wall sections, the fender may be advantageously readily recognized by color and readily cleaned, likewise the fender of which top surface only of the impact receiving section is coated with polytetramethylene glycol type polyurethane elastomer. In this case, since the lateral wall sections are the portions which exert an influence upon the reaction force, i.e., the capability of compression, of the fender, the thickness of each of the coating layers on the lateral wall sections should be within such a range as not to injure such capability. This is because the inventors have set, after hard study, the thickness of each of the coating layers of polytetramethylene glycol type polyurethane elastomer on the surfaces of the lateral wall sections to 10% or less of the thickness of each of the lateral wall sections such that no bad influence is exerted to the impact energy absorption action of the fender.

### Brief explanation of the drawings

Figure 1 is a perspective view of a rubber fender in accordance with this invention;
Figure 2 is a section view of the fender in Figure 1;
Figure 3 is a graph illustrating the relationship between the deflection and the reaction force of polytetramethylene glycol type polyurethane elastomer on the lateral wall according to each of coating thicknesses;
Figure 4 is a perspective view of a conventional fender;
Figure 5 is a section view of the fender in Figure 4; and
Figure 6 is a graph illustrating the relationship between the deflection and the reaction force of the fender in Figure 1.

### Detailed description of the invention

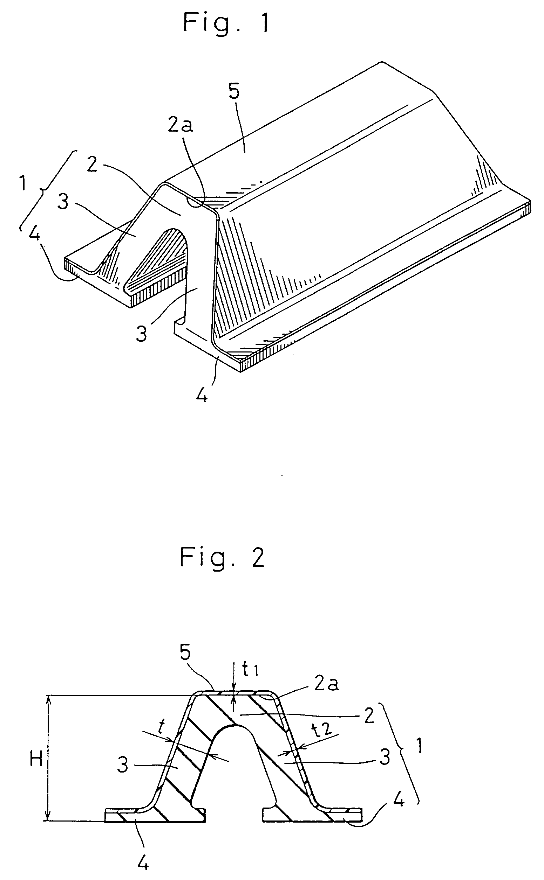

The following description will discuss an example of the present invention with reference to Figs. 1 to 3.

Fig. 1 is a perspective view of the fender in accordance with this invention, while Fig. 2 is a section view thereof.

As shown in Figs. 1 and 2, the fender of this example has a main body 1 and is made up of an impact receiving section 2, lateral wall sections 3 and fitting sections 4, which are made of an elastic rubber. The surface of the main body 1 is coated with polytetramethylene glycol type polyurethane elastomer coating layer 5.

Examples of the elastic rubber material forming the main body 1 are conventionally used natural rubber, synthetic rubber and carbon black-containing rubber such as mixed rubber of the rubbers above-mentioned. The use of such an elastic rubber assures an impact energy absorption action required for a fender.

As the polytetramethylene glycol type polyurethane elastomer for coating the outer surfaces of the main body 1, a material based on, for example, polytetramethylene-ether-glycol (PTMEG) is preferred in due consideration of water resistance and abrasion resistance. This may be colored as desired with a variety of coloring agents added thereto, and is highly superior in abrasion resistance to natural rubber, synthetic rubber or the like. More specifically, when the index of abrasion resistance of PTMEG-type polyurethane elastomer (higher is better) is set to 100, the carbon black-containing natural rubber or synthetic rubber presents the index of abrasion resistance of 50, while natural rubber or synthetic rubber of which color is other than black and to which other reinforcing agent than carbon black is used, presents the index of abrasion resistance of 40. The price of the PTMEG-type polyurethane elastomer is three times or more the price of other rubber material. However, the amount of use of the PTMEG-type polyurethane elastomer is smaller, resulting in no substantial increase in cost.

The thickness t₁ of the coating layer 5 on the top surface 2a of the impact receiving section 2 is in a range from about 2 to about 20 mm. If the thickness of the coating layer 5 is smaller than the range above-mentioned, neither sufficient abrasion resistance nor sufficient damage resistance may be obtained. If the thickness of the coating layer 5 is greater than the range above-mentioned, the cost is increased, which is not economically favorable.

The thickness t₂ of the coating layer 5 on the surface of each lateral wall section 3 is 10% or less of the thickness t of each lateral wall section 3 for the following reasons.

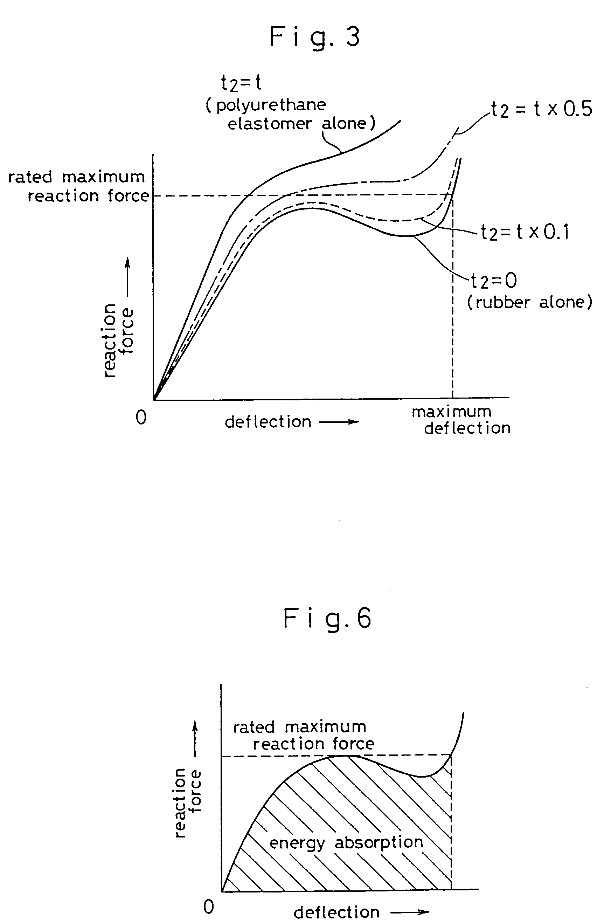

Since the hardness of polytetramethylene glycol type polyurethane elastomer is harder than 75Hs (JIS A), this exerts an influence upon the compression capability of the fender. Such influence may be expressed in term of the relationship, as shown in Fig. 3, between the reaction force and the deflection of the fender at each thickness of the coating layer 5 of polytetramethylene glycol type polyurethane elastomer. Fig. 3 shows the relationship between the reaction force and the deflection at each of the thicknesses from t₂ = 0 (rubber alone) to t₂ = t (polytetramethylene glycol type polyurethane elastomer alone). The reaction force of the fender is limited (the rated maximum reaction force). As the energy absorption within the preset reaction is higher, the capability of the fender is higher.

It is apparent from Fig. 3 that, with the increase in the thickness t₂ of the coating layer of polytetramethylene glycol type polyurethane elastomer, the relationship curve is changed from a buckling form to a gradual increase form so that the reaction force is increased.

As to the capability of the fender, it is a common practice that the point where the ratio E/R of the impact energy absorption E to the reaction force R is maximized, is determined as a maximum deflection. Accordingly, a test was conducted to check the E/R value at each thickness t₂ of the coating layer 5. The results are shown in Table 1. The fender used in the test had the height H which was equal to 100 mm, and the main body was made of mixed rubber (hardness of 70Hs (JIS A)) of natural rubber with SBR rubber, and the polytetramethylene glycol type polyurethane elastomer was a PTMEG-type material (hardness of 90 Hs (JIS A)).

The hardness test of the JIS A type was conducted with the use of an A-type spring-type hardness testing machine. That is, the pressing surface at the lower surface of this testing machine came in contact with the surface of the specimen. Then, there was measured, as the hardness of the specimen, the distance by which the pushing needle projecting from the center hole in the pressing surface by a spring pressure was pushed back by the surface (rubber surface) of the specimen.

**Table 1**

| Thickness t₂ (mm) | Reaction force R(Kg) | Energy absorption E(Kg-Cm) | E/R | Maximum deflection (%) |
|---|---|---|---|---|
| 0 (rubber alone) | 550 | 1900 | 3.45 | 50 |
| 0.1xt(10%) | 580 | 1970 | 3.39 | 49 |
| 0.2xt(20%) | 620 | 2015 | 3.25 | 47 |
| 0.5xt(50%) | 690 | 2080 | 3.02 | 43 |
| t (urethane alone) | 750 | 2020 | 2.70 | 40 |

Generally speaking, as the E/R value is higher, the capability of the fender is better. As apparent from Table 1, however, the E/R value is lowered with the increase in thickness t₂ of the coating layer 5. Accordingly, the increase in the thickness t₂ of the coating layer 5 on the surface of each lateral wall section 3 may cause the energy absorption to be lowered. It is therefore considered suitable to set the thickness t₂ to 10% or less of the thickness t of each lateral wall section 3.

No restrictions are imposed on the way to form the coating layer 5. Any of conventional coating methods may be applied. For example, there may be adopted a method by which liquidous polytetramethylene glycol type polyurethane is applied to a rubber material after heated and vulcanized in a mold.

In this example above-mentioned, the coating layer 5 is disposed on the entire surface of the main body 1 of the fender. It is a matter of course, however, that the coating layer 5 may be disposed only on the top surface 2a of the impact receiving section 2.

The present invention produces the following results:
(1) When the coating layer of polytetramethylene glycol type polyurethane elastomer is disposed on the top surface of the impact receiving section;
   (1-1) Even though the broadside of a ship repeatedly comes in contact with the fender, the fender is not easily abraded and damaged but maintains high abrasion resistance because of the abrasion resistance and damage resistance provided by the polytetramethylene glycol type polyurethane elastomer. Thus, the fender may be used for a long period of time. Further, the polytetramethylene glycol type polyurethane elastomer has a small friction factor. Accordingly, seaweeds and shells such as acorn shells attached to the fender, if any, may be readily removed, thus facilitating the cleaning of the fender.
   (1-2) Since the polytetramethylene glycol type polyurethane elastomer may be freely colored, the fender position may be securely visually made sure. This prevents a ship from erroneously coming in contact with an article instead of the fender. This not only enhances the safety, but also improves the beauty of the pier.
   (1-3) Only the surface of the fender is coated with polytetramethylene glycol type polyurethane elastomer. This prevents the increase in cost, providing an advantage in view of economy.
   (1-4) The top surface of the impact receiving section has no relation with the compression capability or the like of the fender. This does not injure the impact energy absorption action which is required as the absolute condition of the fender.
(2) When the coating layer of polytetramethylene glycol type polyurethane elastomer having a predetermined thickness is disposed not only on the top surface of the impact receiving section, but also on the lateral surfaces of the lateral wall sections of the fender, the fender may be readily recognized by color and readily cleaned without the impact energy absorption action thereof injured, likewise the fender of which only the top surface of the impact receiving section is coated.

## Claims

1. A rubber fender (1) comprising an outer impact receiving section (2), side wall sections (3) extending from said impact receiving section and fitting sections (4) attached to the tips of said side wall sections (3), all said sections being made of rubber alone, characterised in that the top surface of said outer impact receiving section and the surfaces of side wall sections are coated with a layer of polytetramethylene glycol type polyurethane elastomer (5),
said coating layer of polytetramethylene glycol type elastomer on the top surface (2a) of said outer impact receiving section having a thickness (t1) in a range from 2 to 20 mm, and said coating layer (5) of polytetramethylene glycol type elastomer on each of the surfaces of said side wall sections (3) having a thickness (t2) set of 10% or less of the thickness (t) of each of said side wall sections.

2. A rubber fender according to claim 1, wherein the coating layer (5) contains coloring agents.

3. A rubber fender as claimed in claim 1 or 2, in which the coating layer (5) is of the same thickness (t1 and t2) over the said top surface (2a) and the said side wall sections (3).

## Patentansprüche

1. Fender aus Kautschuk (1), der einen äußeren, den Stoß aufnehmenden Abschnitt (2), Seitenwandabschnitte (3), die von da den Stoß aufnehmenden Abschnitt ausgehen, und Befestigungsabschnitte (4), die an den Spitzen der Seitenwandabschnitte (3) angebracht sind, aufweist, wobei alle Abschnitte nur aus Kautschuk hergestellt sind, gekennzeichnet dadurch, daß die obere Fläche des äußeren, den Stoß aufnehmenden Abschnitts und die Oberflächen der Seitenwandabschnitte mit einer Schicht (5) eines Polyurethanelastomers des Polytetramethylenglykol-Typs überzogen sind,
wobei diese Deckschicht aus einem Elastomer des Polytetramethylenglykol-Typs auf der oberen Fläche (2a) des äußeren, den Stoß aufnehmenden Abschnitts eine Stärke (t1) im Bereich von 2 mm bis 20 mm hat und diese Deckschicht (5) aus einem Elastomer des Polytetramethylenglykol-Typs auf jeder der Oberflächen der Seitenwandabschnitte (3) eine Stärke (t2) hat, die auf 10 % oder weniger der Stärke (t) jedes der Seitenwandabschnitte festgelegt ist.

2. Fender aus Kautschuk nach Anspruch 1, bei welchem die Deckschicht (5) färbende Substanzen enthält.

3. Fender aus Kautschuk nach Anspruch 1 oder 2, bei welchem die Deckschicht (5) über der oberen Fläche (2a) und den Seitenwandabschnitten (3) dieselbe Stärke (t1 und t2) hat.

## Revendications

1. Défense (1) en caoutchouc comprenant une section externe (2) qui reçoit les chocs, des sections de parois latérales (3) s'étendant depuis ladite section qui reçoit les chocs, et des sections d'assemblage (4) fixées aux extrémités desdites sections de parois latérales (3), toutes lesdites sections étant réalisées en caoutchouc seul, caractérisée en ce que la surface supérieure de ladite section externe qui reçoit les chocs et les surfaces des sections de parois latérales sont recouvertes d'une couche d'un élastomère de polyuréthane (5) du type du polytétraméthylèneglycol,
ladite couche de recouvrement d'élastomère du type du polytétraméthylèneglycol sur la surface supérieure (2a) de ladite section externe qui reçoit les chocs ayant une épaisseur (t1) dans le domaine de 2 à 20 mm et ladite couche de recouvrement (5) d'élastomère du type du polytétraméthylèneglycol sur chacune des surfaces desdites sections de parois latérales (3) ayant une épaisseur (t2) réglée à 10% ou moins de l'épaisseur (t) de chacune desdites sections de parois latérales.

2. Défense en caoutchouc selon la revendication 1, dans laquelle la couche de recouvrement (3) contient des agents colorants.

3. Défense en caoutchouc selon la revendication 1 ou 2, dans laquelle la couche de recouvrement (3) a la même épaisseur (t1 et t2) par-dessus ladite surface supérieure (2a) et par-dessus lesdites sections de parois latérales (3).
